# EUROPÄISCHE PATENTSCHRIFT

(11) **EP 0 888 597 B1**
(45) Veröffentlichungstag und Bekanntmachung des Hinweises auf die Patenterteilung: **12.01.2000**
(21) Anmeldenummer: 97919268.9
(22) Anmeldetag: 12.03.1997
(51) Int. Cl.: G07F 17/16, G07F 7/10

(54) **VERFAHREN ZUR DATENKOMMUNIKATION UND DATENKOMMUNIKATIONSSYSTEM ZUR DURCHFÜHRUNG DES VERFAHRENS**
PROCESS FOR DATA COMMUNICATIONS AND A DATA COMMUNICATIONS SYSTEM FOR CARRYING OUT THE PROCESS
PROCEDE DE TRANSMISSION DE DONNEES ET SYSTEME DE TRANSMISSION DE DONNEES APPROPRIE POUR METTRE LEDIT PROCEDE EN OEUVRE

(30) Priorität: 12.03.1996 DE 19609556
(43) Veröffentlichungstag der Anmeldung: 07.01.1999
(73) Patentinhaber: Schneider, Bernd, 01462 Ockerwitz (DE)
(72) Erfinder: Schneider, Bernd, 01462 Ockerwitz (DE)
(74) Vertreter: Adler, Peter, Dipl.-Ing.
(86) Internationale Anmeldenummer: DE9700485
(87) Internationale Veröffentlichungsnummer: WO9735398

(56) Entgegenhaltungen:
- EP-A- 0 143 766
- EP-A- 0 491 639
- WO-A-94/12954
- DE-U- 29 515 737
- FR-A- 2 640 782

## Beschreibung

Die Erfindung betrifft ein Verfahren zur Datenkommunikation, bei dem mittels eines Erfassungsgerätes durch einen Sender-Nutzer Informationsdaten erfaßt und, mit zugehörigen Adreßdaten versehen, einem berechtigten Empfänger-Nutzer in einem Hostrechner zur Ausgabe derselben bereitgestellt werden. Dabei wird zur Feststellung der Berechtigung ein Vergleich zwischen Identifikationsdaten und Adreßdaten durchgeführt. Dabei wird während einer der Datenkommunikation vorausgehenden Konfiguration ein transportabler Datenträger mit datenträger- und/oder nutzerspezifischen Identifikationsdaten versehen, der zumindest durch den Empfänger-Nutzer derart verwendet wird, daß diese Identifikationsdaten zur Feststellung der Berechtigung aus dem Datenträger ausgelesen werden. Bei Übereinstimmung wird zumindest ein Empfangssignal zur Kennzeichnung vorliegender Informationsdaten an den Empfänger-Nutzer ausgegeben.

Die Erfindung betrifft weiterhin ein Datenkommunikationssystem mit einem transportablen Datenträger, einem Datenerfassungsgerät zur Erfassung und Speicherung von Daten auf dem Datenträger, einem Datenlesegerät zum Lesen des Datenträgers und einem Datenausgabegerät und mit mehreren voneinander räumlich getrennten Kommunikationseinrichtungen, die zumindest das Datenlesegerät beinhalten und eine Verbindung über eine Standleitung, eine wählbare Telefonleitung oder eine Datenfunkleitung zu einem Hostrechner aufweisen.

Es ist bekannt, Daten zwischen zwei oder mehreren Computern mittels transportabler Datenträger, wie beispielsweise mittels Disketten auszutauschen. Dabei ist es erforderlich, daß die Datenträger stets physisch versandt werden müssen. Eine auf einem Datenträger gespeicherte Information erreicht den Empfänger nur durch Erhalt des Datenträgers und anschließendem Auslesen der gespeicherten Daten. Ein derartiger Datenaustausch ist sehr zeitaufwendig und relativ unzuverlässig. Hinzu kommt, daß ein unberechtigter Empfänger sofort im Besitz aller übermittelten Daten ist. Selbst wenn diese verschlüsselt sein sollten, hat der unberechtigte Empfänger hinreichend Zeit, die Daten zu entschlüsseln.

In letzter Zeit sind auch Kommunikationssysteme entwickelt worden, die einen physischen Versand von Datenträgern vermeiden. Hierzu zählen insbesondere bekannte Datennetze.

Bei der Nutzung derartiger Datennetze werden mittels eines Erfassungsgerätes, wofür im allgemeinen ein Computer eingesetzt wird, durch einen Sender-Nutzer Informationsdaten, die an einen Empfänger-Nutzer des Datennetzes gesandt werden sollen, erfaßt. Damit diese Informationsdaten den Empfänger erreichen, werden diese mit zugehörigen Adreßdaten versehen. Diese Informationsdaten werden sodann an einen Hostrechner gesandt, zu dem beide Nutzer Zugang haben.

In diesem Hostrechner oder einem zugehörigen Speichermedium werden die Informationsdaten einem berechtigten Empfänger-Nutzer zur Ausgabe derselben bereitgestellt. Dabei wird zur Feststellung der Berechtigung ein Vergleich zwischen Identifikationsdaten und Adreßdaten durchgeführt.

Da nicht zu erwarten ist, daß beide Nutzer zeitgleich Zugang zu dem Hostrechner haben, werden die Informationen in sogenannten Mailboxen empfängerspezifisch abgelegt.

Im allgemeinen ist der Zugang zu derartigen Netzen jedoch nur mit einer relativ aufwendigen Hardware möglich. Obwohl diese Verbindungsmöglichkeiten von Anwendern, die ohnehin mit einem Computer entsprechender Hardwarekonfiguration umzugehen haben, gern genutzt werden, stellt die Anschaffung von entsprechender Hardware eigens zu dem Zwecke der Teilnahme an einer modernen Datenkommunikation für zahlreiche Anwender ein Hemmnis dar. Hinzu kommt, daß die Anwendung entsprechender Datenkommunikationssoft- und -hardware einige Kenntnisse abverlangt, die bei breiten Anwenderkreisen nicht ohne weiteres vorausgesetzt werden können.

Somit bleibt die vorteilhafte Möglichkeit, Informationen zu dem gewünschten Zeitpunkt abrufen zu können und nicht stets empfangsbereit sein zu müssen, nur einem kleinen Nutzerkreis offen.

Eine Möglichkeit eines zeitunabhängigen Empfanges von Nachrichten, die breiten Nutzerkreisen offenstehen, stellen Anrufbeantworter oder elektronische Telefonmailboxen dar. Allerdings zeigen diese den Nachteil einer oft festzustellenden psychischen Hemmschwelle, da der Nutzer unmittelbar mit der Tatsache konfrontiert wird, in kurzer und prägnanter Form seine Nachricht aufzusprechen und keine Korrekturmöglichkeit mehr hat. Außerdem bleibt ein derartiges Hinterlegen von Nachrichten nur auf eine verbale Kommunikation beschränkt.

Da aus den genannten Gründen die vorhandenen Möglichkeiten zur Hinterlegung von Nachrichten und zum Abruf derselben zu einem von dem Empfänger gewünschten Zeitpunkt nur sehr zögernd genutzt werden, finden Funktelefone eine ständig zunehmende Verbreitung. Allerdings geht mit der starken Zunahme derartiger Telefone, die zumeist ständig in Empfangsbereitschaft gehalten werden, eine Zunahme der elektromagnetischen Strahlenbelastung einher. Dies kann in der Zukunft - ein Nachweis einer ökologischen Schädlichkeit vorausgesetzt - ein nicht zu vernachlässigendes Problem darstellen.

In der internationalen Patentanmeldung WO 94/12954 ist ein Telefon Paging System beschrieben. Darin beinhaltet eine zentrale Datenbasis eine Antenne, über die einzelne Pager mit der Datenbasis verbunden sind. Diese Pager geben dem Teilnehmer, der den Pager trägt, Signale. Über Kommunikationskanäle sind auf der anderen Seite einzelne Telefone mit der Datenbasis verbunden.

Beabsichtigt nunmehr ein Nutzer mit einem Teilnehmer Verbindung aufzunehmen, sendet er unter Nutzung eines Telefons eine Nachricht an die zentrale Datenbasis. Über die Übertragungsantenne wird daraufhin ein Sendesignal an einen der vielen Pager adressiert, der dieses Sendesignal empfängt. Der Pager signalisiert daraufhin dem Teilnehmer den Empfang der Nachricht durch direkte Anzeige oder ein geeignetes Signal.

Ein derartiger Pager ist sehr gut geeignet, einem Teilnehmer Signale oder kurze Nachrichten zu senden. Allerdings ist die Reichweite der Pager auf die Reichweite der Antenne beschränkt und der Umfang der übermittelten Daten ist sehr gering, da dieser Pager im eigentlichen nur dazu dient, nach dem Empfang über andere Kommunikationsmittel in einen ausführlichen Informationsaustausch zu treten. Ein Absenden von Nachrichten ist in der Regel nicht oder wenn überhaupt nur in einem sehr eingeschränktem Maße möglich.

Es ist nunmehr Aufgabe der Erfindung, ein Informationssystem und ein Verfahren zum Informationsaustausch anzugeben, welches einen modernen Datenaustausch mit geringem technischen Bedienungsaufwand kostengünstig ermöglicht und mit dem alle Informationen mit großer Datensicherheit durch den Empfänger zu einem gewünschten Zeitpunkt abrufbar sind.

Verfahrensseitig wird diese Aufgabe erfindungsgemäß durch die Merkmale des unabhängigen Anspruches 1 gelöst.

Mit diesem Verfahren wird es möglich, zu einem beliebigen Zeitpunkt mittels einer Identifikation zumindest ein Signal darüber zu erhalten, ob eine Information für einen Empfänger vorliegt. Eine solche Signalisierung kann mit einfachen technischen Mitteln erfolgen, so daß ein Nutzer nicht mit einer relativ umfangreichen Hardware ausgestattet sein muß, um zu erfahren, ob eine Information für ihn vorliegt. Ein Nutzer kann nur dann Informationen weitergeben, wenn er persönlich dazu berechtigt ist. Dies ist für all die Fälle von Bedeutung, bei denen das Versenden mit Gebühren verbunden ist, mit denen der Nutzer zu belasten ist.

Außerdem ist ein Sender-Nutzer nur bei Übereinstimmung einer eingegebenen Identifikation mit einer eingespeicherten persönlichen Identifikation in der Lage, die Absenderangaben zu versenden. Hierbei wird es möglich, für einen Empfänger-Nutzer sicherzustellen, daß die Information, die er mit der entsprechenden Absenderangabe vorfindet, auch tatsächlich von dem Absender stammt. Bei mißbräuchlicher Benutzung des Datenträgers durch einen Dritten, etwa nach einem Verlust durch den Nutzer, kann also zumindest das Absenden falscher Informationen verhindert werden.

Durch dieses Datenkommunikationssystem ist es beispielsweise auch möglich, daß die Chipkarte mit bekannten Scheck-, Kredit- oder ähnlichen Karten kombiniert ist.

Mit einer Chipkarte können alle dargestellten Funktionen realisiert werden, ohne daß besondere Anforderungen an den Chip gestellt werden müssen. Somit können Standardchips eingesetzt werden, wodurch sich der Einsatz für den Nutzer sehr kostengünstig gestaltet. Chipkarten haben außerdem den Vorteil, daß sie sehr gut zu handhaben sind.

In einer Ausführungsform des erfindungsgemäßen Verfahrens wird das Empfangssignal über einen separaten Übermittlungskanal an den Empfänger-Nutzer übermittelt.

Hierdurch kann es ermöglicht werden, daß ein Nutzer beispielsweise über den Weg eines RDS-, eines DAB-, Videotext- oder eines anderen Signales, welche empfängerspezifisch codiert sind, ein kurzes Signal erhält, daß eine Information für ihn vorliegt. Das kann auch über andere Signalwege, wie beispielsweise ein City-Rufsignal, erfolgen. Der Nutzer ist nunmehr in der Lage, zu dem nähesten ihm gelegenen Zeitpunkt die Information abzurufen.

Eine besonders bevorzugte Ausführung der Erfindung ist dadurch gekennzeichnet, daß die zu sendenden Informations- und/oder Adreßdaten zu einem Zeitpunkt auf dem transportablen Datenträger gespeichert und zu einem späteren Zeitpunkt aus diesem Datenträger zur Dateneingabe an den Hostrechner ausgelesen werden.

Damit ist der Sender-Nutzer in die Lage versetzt, unabhängig von seinem Standort und zeitunabhängig, Informationen zu erfassen. Er kann auch Informationen durch dritte Personen erstellen lassen, um sie zu einem gewünschten Zeitpunkt zu versenden. Diese Informationen sind auf dem Datenträger gespeichert und somit für den Nutzer verfügbar, ohne daß er ein kompaktes Gerät mit sich tragen muß.

In einer Variante des erfindungsgemäßen Verfahrens bestehen die Berechtigungsdaten aus einer eingebbaren Identifikation derart, daß vor dem Vergleich mit den Berechtigungsdaten durch den Nutzer die Identifikation eingegeben wird, mit der die auf dem transportablen Datenträger gespeicherte persönliche Identifikation verglichen wird.

Bei dieser Ausführung wird die Berechtigung durch den Datenträger bestimmt. Auf dem Datenträger können somit auch verschiedene Berechtigungsbereiche voreingestellt werden

In einer anderen Variante des erfindungsgemäßen Verfahrens sind die Berechtigungsdaten in dem Hostrechner gespeichert.

Hierbei liegt die Bestimmung der Berechtigung in dem Hostrechner. Sie kann also auch zentral geändert werden. In der Praxis wird sich gegebenenfalls auch eine Kombination beider vorstehend genannter Ausführungsformen als zweckmäßig erweisen.

Besonders zweckmäßig ist es, daß die speichereigene Identifikation beim Senden von Informationsdaten nach Übereinstimmung einer vor dem Senden einzugebenden Identifikation des Sender-Nutzers mit einer in dem Speicher eingespeicherten persönlichen Identifikation aus dem Speicher als Absenderinformation des Sender-Nutzers auslesbar ist.

Durch eine derartige Variante kann die Absenderangabe automatisch erfolgen. Damit wird einerseits der Bedienungskomfort erhöht, da es einem Sender-Nutzer erspart bleibt, seine Absenderangaben einzugeben. Für den Empfänger-Nutzer wird andererseits die Sicherheit erhöht, da er davon ausgehen kann, daß die Absenderangaben unverfälscht sind, da sie automatisch vergeben werden.

Eine günstige Ausgestaltung des erfindungsgemäßen Verfahrens ist dadurch gekennzeichnet, daß die eingespeicherte persönliche Identifikation nach Übereinstimmung einer vor dem Senden einzugebenden Identifikation des Sender-Nutzers mit der in dem Speicher eingespeicherten persönlichen Identifikation veränderbar ist.

Hierdurch wird ein Nutzer in die Lage versetzt, zur Erhöhung der Datensicherheit in Zeitabständen seine eingespeicherte persönliche Identifikation zu ändern.

Weiterhin ist es günstig, daß mittels der Adreßdaten oder einer zusätzlichen Dienstekennung die Informationsdaten unter Zwischenschaltung anderer Netze an Empfänger weitergeleitet werden.

Mittels der besonderen Adressierung oder günstigerweise mittels einer besonderen Dienstekennung können auch andere Netze, wie beispielsweise ein Faxdienst oder E-Mail-Dienste anderer Netzanbieter erreicht werden, wodurch sich das Anwendungsgebiet des erfindungsgemäßen Verfahrens vergrößert.

In einer weiteren günstigen Form des erfindungsgemäßen Verfahrens ist vorgesehen, daß von dem Hostrechner eine der übermittelten Informationsdaten entsprechende Gebühreninformation erzeugt und auf dem transportablen Datenträger gespeichert wird.

Mit einer entsprechenden Voreinstellung eines Gebührenwertes kann bei einer derartigen Ausführung des Verfahrens, ähnlich wie bei bekannten Telefonkarten, solange eine Informationsübermittlung oder ein Lesen von Informationen erfolgen, wie es der voreingestellte Gebührenwert hergibt.

In einer anderen günstigen Form des erfindungsgemäßen Verfahrens wird auf der Chipkarte eine Buchungskennung gespeichert und von dem Hostrechner eine der übermittelten Informationsdaten entsprechende Gebühreninformation erzeugt. Diese Gebühreninformation wird an einen der Buchungskennung entsprechenden Rechner zur weiteren Verarbeitung weitergeleitet.

Mit dieser Form wird es sodann möglich, eine bei der Kommunikation anfallende Gebühr direkt von der Bankverbindung des Nutzers abzubuchen. Zur Nutzung dieser Form ist es besonders günstig, wenn das erfindungsgemäße Verfahren entsprechend der oben genannten Darstellung nur über die richtige Eingabe einer Identifikation nutzbar ist.

Anordnungsseitig wird die Aufgabe erfindungsgemäß durch die kennzeichnenden Merkmale des unabhängigen Anspruches 11.

Durch dieses Datenkommunikationssystem sind eine Vielzahl von netzartigen Kommunikationseinrichtungen vorgesehen, die die nötige Verbindung zu dem Hostrechner aufweisen. Damit ist der Nutzer von dem eigenen Transport derartiger Kommunikationseinrichtungen befreit, obgleich er auch persönliche Kommunikationseinrichtungen benutzen kann, insbesondere dann, wenn diese über eine Datenfunkverbindung mit dem Hostrechner verbunden sind. Der Regelfall dürfte es allerdings sein, daß zentrale Kommunikationseinrichtungen benutzt werden.

Die einfachste Konfiguration einer Kommunikationseinrichtung ist darin zu sehen, daß diese lediglich ein Datenlesegerät enthält. Damit können Daten von dem Datenträger gelesen und anschließend an den Hostrechner weitergeleitet werden. In diesem Falle ist es allerdings zweckmäßig, eine Anzeige in der Art vorzusehen, daß der Nutzer ein optisches oder akustisches Signal erhält, wenn der Datenlesevorgang abgeschlossen ist. Auch ist es sinnvoll, wenn ihm über eine derartige Anzeige signalisiert wird, daß Informationen für ihn in dem Hostrechner vorliegen.

Mit einer Ergänzung der Kommunikationseinrichtung um ein Datenausgabegerät können Daten, die für den Nutzer bereitgestellt werden, entweder sogleich angezeigt werden oder auf den Datenträger gespeichert werden.

In dem Falle, daß die Kommunikationseinrichtung nur mit einer Leseeinrichtung versehen ist und/oder Empfangsdaten auf dem Datenträger abgespeichert werden, ist es erforderlich, daß die Daten unabhängig von der Kommunikationseinrichtung erfaßt und gelesen werden können. Hierfür bieten sich entweder stationäre Rechner oder tragbare Computer, insbesondere Taschencomputer an, die mit entsprechenden Lesegeräten für den Datenträger versehen sind.

Zweckmäßig ist es, für unterschiedliche Ausbaustufen der Kommunikationseinrichtungen die Software für das Lesen von dem Datenträger oder das Schreiben auf den Datenträger zumindest mit funktionswichtigen Teilen auf dem Datenträger selbst zu speichern.

Durch den Aufbau des Datenkommunikationssystems wird es möglich, daß der Nutzer lediglich den transportablen Datenträger bei sich führen muß. Er ist also der Anschaffung aufwendiger Hardware und deren aufwendiger Installation entbunden, wodurch eine große Nutzerzahl Zugang erhalten kann.

Durch die Fähigkeit, die empfängerspezifischen Adreß- und Informationsdaten zu ändern, wird es möglich, voreingestellte Datenträger von mehreren Herstellern anzubieten. Diese können sodann durch den Nutzer selbst individualisiert werden, indem er die Identifikationsdaten seinen persönlichen Bedürfnissen anpaßt.

Besonders zweckmäßig ist es, die Kommunikationseinrichtung als Datenerfassungs- und -ausgabegerät derart auszuführen, daß das Datenerfassungs-, das Datenlese- und das Datenausgabegerät in einem Gerät integriert sind.

Mit einer derartigen Gerätekonfiguration können Informationsdaten erfaßt und versendet und ebenso empfangen werden. Somit wird einer derartigen Kombination bei zentralen Kommunikationseinrichtungen der Vorzug gegeben werden.

In einer weiteren zweckmäßigen Ausgestaltung der Erfindung ist vorgesehen, daß der Hostrechner mit adressierbaren Verbindungen zu anderen Netzen versehen ist.

Bei einer derartigen Form der Erfindung kann der Nutzer mit seinen Datenträgern Netze anderer Netzbetreiber nutzen, ohne weitere Hardware bei sich führen zu müssen.

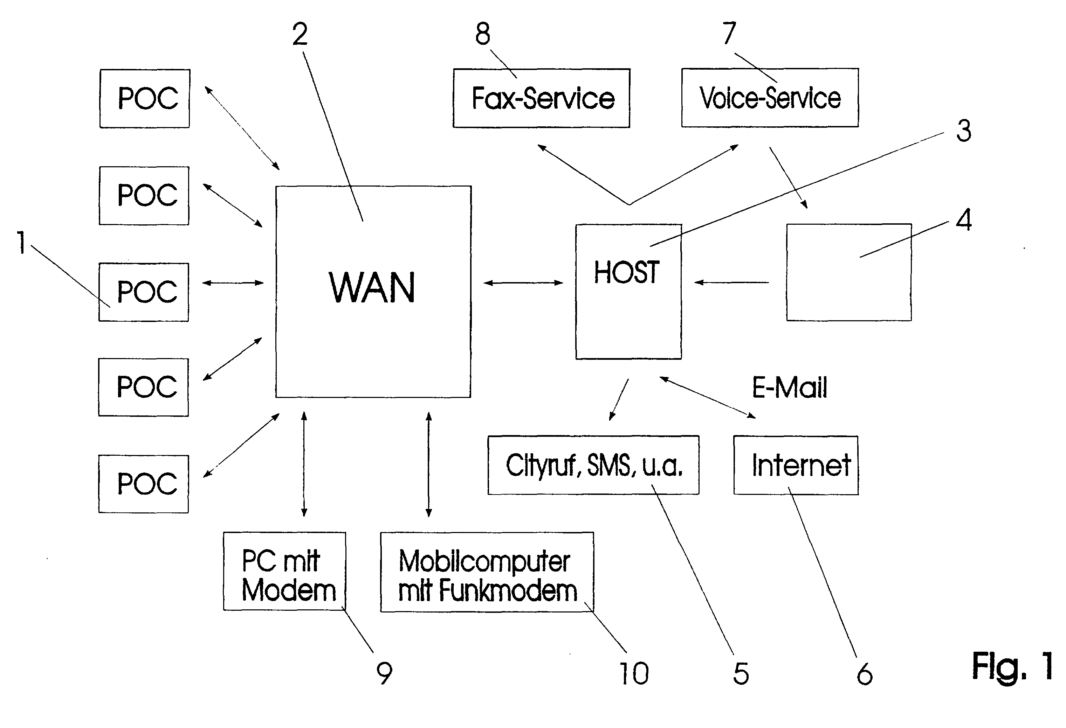

Die Erfindung soll nachfolgend anhand eines Ausführungsbeispieles näher erläutert werden. In den zugehörigen Zeichnungen zeigt
- Fig. 1: eine schematische Übersicht über ein erfindungsgemäßes Datenkommunikationssystem und
- Fig. 2: eine schematische Darstellung einer Ausführungsform mit einem transportablen Datenerfassungs- und anzeigegerät.

Innerhalb eines Territoriums sind mehrere Kommunikationspunkte (Point of Communication - POC) 1 vorgesehen. Innerhalb dieser Kommunikationspunkte sind nicht näher dargestellte Kommunikationseinrichtungen angeordnet. Diese sind als kombiniertes Datenerfassungs- und -ausgabegerät ausgeführt. In ihnen ist je ein Datenerfassungs-, ein Datenlese- und ein Datenausgabegerät integriert.

Die einzelnen Kommunikationspunkte sind über ein Netzwerk 2 mit einem Hostrechner 3 verbunden. Dieser Hostrechner 3 weist wiederum Verbindungen zu weiteren Kommunikationsdiensten 4, wie City-Ruf 5, Internet 6 mit angeschlossenem E-Mail-Dienst, Voice-Dienste 7 oder Faxdienste 8 auf.

Sowohl Sender-Nutzer als auch Empfänger-Nutzer verwenden als Datenträger nicht näher dargestellte Chipkarten, auf denen ein schreib- und lesbarer nv-Speicher angeordnet ist.

In diesem Speicher ist eine datenträgerspezifische Identifikation eingeschrieben. Jeder Nutzer hat vor der ersten Benutzung seine Chipkarte mittels einer eigenen personenspezifischen Identifikation individualisiert.

Zur Kommunikation zwischen zwei Nutzern kommunizieren die Chipkarten nunmehr nicht unmittelbar miteinander. Vielmehr wird beispielsweise über einen stationären Rechner eine Datei erfaßt und auf der Chipkarte abgespeichert. Diese Datei enthält Daten, die während einer Reise eines Nutzers noch zu spezifizieren sind. Nachdem die endgültigen Daten vorliegen, beabsichtigt der Nutzer diese aktuellen Daten beispielsweise an einen Lieferanten weiterzugeben. Damit wird dieser Nutzer zum Sender-Nutzer. Er wird nunmehr mit seiner Chipkarte zu dem nächstgelegenen Kommunikationspunkt gehen und dort seine Chipkarte mit den (zunächst noch nicht aktualisierten) Daten in den Kartenleser der Kommunikationseinrichtung einschieben. Da die Kommunikationseinrichtung mit einem Datenerfassungs- und -ausgabegerät versehen ist, kann er sich den bisherigen Dateiinhalt anzeigen lassen. Mittels des Datenerfassungsgerätes kann er sodann die Daten editieren und mit der Adresse seines Lieferanten versehen.

Zum Absender der Datei wird von der Kommunikationseinrichtung in dem Kommunikationspunkt 1 zu dem Hostrechner 3 eine Datenverbindung über das Telefonnetz aufgebaut. Damit liegt die Information nunmehr unter der Adresse des Lieferanten in dem Hostrechner 3.

Da der Lieferant, das heißt also der Empfänger-Nutzer, sehr viele Eingänge an derartigen Daten am Tage zu verzeichnen hat, ist er mit einem Personal Computer 9 über ein Modem an dem Netzwerk 2 angeschlossen und damit mit dem Hostrechner 3 verbunden. An dem PC 9 wird nach Eingang der Datei in dem Hostrechner ein Empfangssignal ausgelöst, so daß der Empfänger-Nutzer nunmehr von dem Eingang Kenntnis erhält und die Daten lesen kann.

In gleicher Weise, wie der Empfänger-Nutzer mit seinem PC 9 an dem Netzwerk 2 angeschlossen ist, können weitere Teilnehmer, beispielsweise über Mobilcomputer 10 und dabei über Funkmodem mit dem Netzwerk 2 verbunden sein.

Soll eine Nachricht an einen anderen Nutzer versandt werden, der nicht on-line mit dem Netzwerk 2 verbunden ist, wird die Information ebenfalls wieder adreßbezogen in dem Hostrechner 3 abgelegt. Dabei kann für die entsprechende Adresse vorgesehen sein, daß eine Benachrichtigung über das Vorliegen einer Information in dem Hostrechner 3 an einen City-Ruf-Empfänger des Empfänger-Nutzers gesandt wird. Somit erhält dieser unmittelbar nach Eingang der Information in dem Hostrechner 3 eine Nachricht, daß neue Informationen für ihn abrufbereit vorliegen.

Der Empfänger-Nutzer wird sich an den nächsten Kommunikationspunkt 1 begeben. Dort schiebt er seine Chipkarte in den Chipkartenleser. Danach wird die chipkartenspezifische Identifikation ausgelesen und mit den Adressen der in dem Hostrechner 3 vorliegenden Informationen verglichen. Dabei wird die Information für den Empfänger-Nutzer ermittelt. Diese wird jedoch erst zur Anzeige gebracht, wenn eine Identifikation, die der Nutzer einzugeben hat, mit der persönlichen Identifikation auf der Chipkarte übereinstimmt. Danach kann der Empfänger die Information lesen oder wiederum auf seiner Chipkarte zur späteren Weiterverarbeitung abspeichern.

Der Hostrechner erstellt für den Datentransfer Gebühreninformationen. Mittels auf der Chipkarte gespeicherter Buchungsinformationen werden die angefallenen Gebühren sogleich auch von dem Konto des Nutzers abgebucht.

Jeder Nutzer ist durch dieses Datenkommunikationssystem in der Lage, zu beliebigen Zeitpunkten Informationen zu erstellen und an Empfänger zu versenden. Der Empfänger kann den Zeitpunkt selbst bestimmen, wann er beabsichtigt, die Information in Empfang zu nehmen.

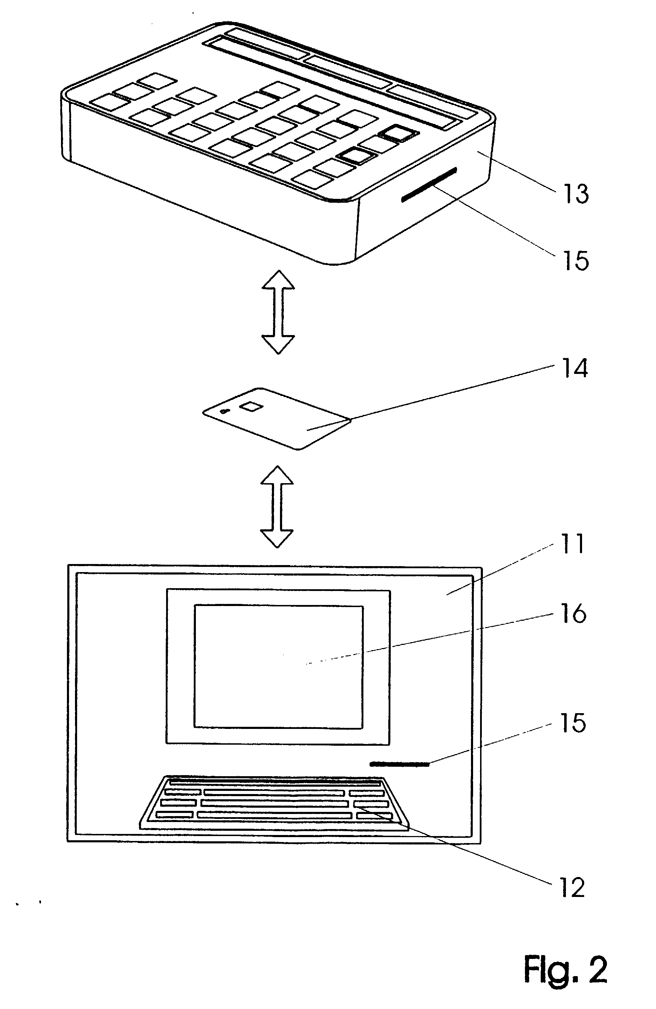

Eine mögliche Ausführungsform des Datenkommunikationssystems ist in Fig. 2 dargestellt. Darin ist vorgesehen, daß die Kommunikationseinrichtung 11 an dem Kommunikationspunkt 1 lediglich mit einer Tastatur 12 versehen ist, die im wesentlichen zur Eingabe der Identifikation, nicht aber zur Eingabe von Informationsdaten dient. Zur Erfassung der Informations- und Adreßdaten dient ein Taschencomputer 13. Den Transport der Daten zwischen Taschencomputer 13 und Kommunikationseinrichtung 11 übernimmt die als Datenträger ausgebildete Chipkarte 14. Zum Lesen und Schreiben von Daten ist sowohl an dem Taschencomputer 13 als auch an der Kommunikationseinrichtung ein Chipkartenlese- und schreibgerät 15 vorgesehen.

Auf der Chipkarte 14 ist neben dem schreib- und lesbaren nv-Speicher noch ein ROM-Speicher angeordnet. In diesem ROM ist die Software gespeichert, die die Schreib- und Lesevorgänge, die mit der Chipkarte 14 durchgeführt werden, kontrolliert.

Durch diese Software kann realisiert werden, daß Schreib- und Lesevorgänge mit der Karte nur ausgeführt werden können, wenn die von dem Nutzer eingegebene Identifikation mit der gespeicherten persönlichen Identifikation übereinstimmt.

Das Erfassen von Informationsdaten und das Erstellen der Adresse, an die diese Informationsdaten gesendet werden sollen, erfolgt über den Taschencomputer 13 unabhängig von jeder Kommunikationseinrichtung 11. Zu dem gewünschten Zeitpunkt kann nunmehr der Nutzer eine Kommunikationseinrichtung 11, indem er die Chipkarte 14 in das Chipkartenlese- und schreibgerät 15 an der Kommunikationseinrichtung 11 einschiebt. Durch diesen Vorgang wird entweder die auf der Chipkarte 14 oder in der Kommunikationseinrichtung 11 gespeicherte Software gestartet, die den Vergleich der Identifikationsdaten vornimmt und die Lese- und Schreibvorgänge steuert.

Somit wir die über den Taschencomputer 13 erstellte Information ausgelesen und mit den Adreßdaten an den Hostrechner 3 gesandt. Dort werden sie dem Adressaten bereitgestellt.

Liegt für den Nutzer selbst eine Information bereit, so wird diese anschließend auf der Chipkarte 14 gespeichert.

Da die visuelle Datenausgabe in diesem Ausführungsbeispiel über den Taschencomputer 13 erfolgen kann, kann sich die Notwendigkeit der Darstellung der Informationsdaten auf dem Bildschirm 16 erübrigen. Der Bildschirm 16 dient somit nur der Menüführung des Nutzers und der Anzeige, ob Informationsdaten vorhanden sind und wann der Schreib- oder Lesevorgang beendet ist und die Chipkarte 13 entnommen werden kann. Folglich kann der Bildschirm 16 auch durch eine einfache optische oder akustische Anzeige der einzelnen Funktionszustände ersetzt werden.

Selbstverständlich besteht auch die Möglichkeit, die Tastatur 12 auch zur Dateneingabe vorzusehen und Anzeige auf dem Bildschirm 16 um die Möglichkeit der Informationsanzeige zu erweitern. Dann können diese Kommunikationseinrichtungen auch von Personen genutzt werden, die nicht über einen Mobilcomputer 10 oder einen Taschencomputer 13 verfügen.

Die einfachste Konfiguration der Kommunikationseinrichtung 11, nämlich die Realisierung des automatischen Lesens, der Weitergabe von Informationsdaten an den Hostrechner und das automatische Schreiben von empfangenen Informationsdaten auf die Chipkarte 14, bietet sich dann an, wenn eine derartige Kommunikationseinrichtung mit bekannten Geldautomaten gekoppelt werden soll.

Mittels einer solchen Kombination kann einerseits das Leistungsangebot von Banken erweitert werden. So kann auf den Kreditkarten noch die zusätzliche Möglichkeit der erfindungsgemäßen Datenkommunikation mit angeboten werden.

Andererseits können bereits vorhandene Geldautomaten nicht nur für den Geldverkehr sondern auch für die Datenkommunikation genutzt werden. Da wesentliche Teile der Geldautomaten, d.h. Hardwareteile, wie Chipkartenleser 15, Tastatur 12 oder Bildschirm 16 und Softwareteile, wie Schreib- und Lesevorgänge, PIN-Abfrage u.ä. in gleicher oder ähnlicher Form bereits vorhanden sind, können derartige Geldautomaten mit der Zusatzfunktion der Datenkommunikation ohne einen erheblichen Aufwand nachgerüstet werden.

Zweckmäßig ist es allerdings bei verschiedensten Konfigurationen, wenn ein Nutzer Zugang zu einem separaten DatenerfaSsungs- und anzeigegerät hat, da er dann ungestört die Informationen vorbereiten und lesen kann.

### Bezugszeichenliste

- 1: Kommunikationspunkt
- 2: Netzwerk
- 3: Hostrechner
- 4: Kommunikationsdienst
- 5: City-Ruf
- 6: Internet
- 7: Voice-Dienst
- 8: Fax-Dienst
- 9: Personal Computer
- 10: Mobilcomputer
- 11: Kommunikationseinrichtung
- 12: Tastatur
- 13: Taschencomputer
- 14: Chipkarte
- 15: Chipkartenlese- und schreibgerät
- 16: Bildschirm

## Patentansprüche

1. Verfahren zur Datenkommunikation, bei dem mittels eines Erfassungsgerätes durch einen Sender-Nutzer Informationsdaten erfaßt und, mit zugehörigen Adreßdaten verseher., einem berechtigten Empfänger-Nutzer in einem Hostrechner zur Ausgabe derselben bereitgestellt werden, wobei zur Feststellung der Berechtigung ein Vergleich zwischen Identifikationsdaten und Adreßdaten durchgeführt wird, wobei während einer der Datenkommunikation vorausgehenden Konfiguration ein transportabler Datenträger mit datenträger- und/oder nutzerspezifischen Identifikationsdaten versehen wird, der zumindest durch den Empfänger-Nutzer derart verwendet wird, daß diese Identifikationsdaten zur Feststellung der Berechtigung aus dem Datenträger ausgelesen werden und bei Übereinstimmung zumindest ein Empfangssignal zur Kennzeichnung vorliegender Informationsdaten an den Empfänger-Nutzer ausgegeben wird, **dadurch gekennzeichnet,** daß als Datenträger eine Chipkarte (14) mit einem schreib- und lesbaren nv-Speicher und einem ROM-Speicher eingesetzt wird,
daß bei der Konfiguration zumindest die datenträgerspezifischen Identifikationsdaten unveränderbar gespeichert werden,
daß durch den Sender-Nutzer zu sendende Informationen auf der Chipkarte (14) gespeichert werden, und
daß im Falle der Benutzung durch einen Sender-Nutzer die Dateneingabe von Informations- und Adreßdaten erst bei Übereinstimmung der Identifikationsdaten mit Berechtigungsdaten freigegeben wird.

2. Verfahren zur Datenkommunikation nach Anspruch 1, **dadurch gekennzeichnet,** daß das Empfangssignal über einen separaten Übermittlungskanal an den Empfänger-Nutzer übermittelt wird.

3. Verfahren zur Datenkommunikation nach Anspruch 1 oder 2, **dadurch gekennzeichnet,** daß die zu sendenden Informations- und/oder Adreßdaten zu einem Zeitpunkt auf der Chipkarte (14) gespeichert und zu einem späteren Zeitpunkt aus der Chipkarte (14) zur Dateneingabe an den Hostrechner ausgelesen werden.

4. Verfahren zur Datenkommunikation nach einem der Ansprüche 1 bis 3, **dadurch gekennzeichnet,** daß die Berechtigungsdaten in einer eingebbaren Identifikation derart bestehen, daß vor dem Vergleich mit den Berechtigungsdaten durch den Nutzer die Identifikation eingegeben wird, mit der die auf dem transportablen Datenträger (14) gespeicherte persönliche Identifikation verglichen wird.

5. Verfahren zur Datenkommunikation nach einem der Ansprüche 1 bis 3, **dadurch gekennzeichnet,** daß die Berechtigungsdaten in dem Hostrechner (3) gespeichert sind.

6. Verfahren zur Datenkommunikation nach einem der Ansprüche 1 bis 5, **dadurch gekennzeichnet,** daß die speichereigene Identifikation beim Senden von Informationsdaten nach Übereinstimmung einer vor dem Senden einzugebenden Identifikation des Sender-Nutzers mit einer in dem Speicher eingespeicherten persönlichen Identifikation aus dem Speicher als Absenderinformation des Sender-Nutzers auslesbar ist.

7. Verfahren zur Datenkommunikation nach einem der Ansprüche 1 bis 6, **dadurch gekennzeichnet,** daß die eingespeicherte persönliche Identifikation nach Übereinstimmung einer vor dem Senden einzugebenden Identifikation des Sender-Nutzers mit der in dem Speicher eingespeicherten persönlichen Identifikation veränderbar ist.

8. Verfahren zur Datenkommunikation nach einem der Ansprüche 1 bis 7, **dadurch gekennzeichnet,** daß mittels der Adreßdaten oder einer zusätzlichen Dienstekennung die Informationsdaten unter Zwischenschaltung anderer Netze an Empfänger weitergeleitet werden.

9. Verfahren zur Datenkommunikation nach einem der Ansprüche 1 bis 8, **dadurch gekennzeichnet**, daß von dem Hostrechner (3) eine der übermittelten Informationsdaten entsprechende Gebühreninformation erzeugt und auf der Chipkarte (14) gespeichert wird.

10. Verfahren zur Datenkommunikation nach einem der Ansprüche 1 bis 9, **dadurch gekennzeichnet**, daß auf der Chipkarte eine Buchungskennung gespeichert und von dem Hostrechner eine der übermittelten Informationsdaten entsprechende Gebühreninformation erzeugt wird und daß diese Gebühreninformation an einen der Buchungskennung entsprechenden Rechner zur weiteren Verarbeitung weitergeleitet wird.

11. Datenkommunikationssystem mit einem transportablen Datenträger, einem Datenerfassungsgerät zur Erfassung und Speicherung von Daten auf dem Datenträger, einem Datenlesegerät zum Lesen des Datenträgers, einem Datenausgabegerät, mehreren voneinander räumlich getrennten Kommunikationseinrichtungen, die zumindest das Datenlesegerät beinhalten und eine Verbindung über eine Standleitung, eine wählbare Telefonleitung oder eine Datenfunkleitung zu einem Hostrechner aufweisen, **dadurch gekennzeichnet,** daß der Datenträger aus einer Chipkarte (14) mit einem schreib- und lesbaren nv-Speicher und einem ROM-Speicher besteht, auf der unveränderbare datenträgerspezifische Identifikationsdaten gespeichert und über das Detenerfassungsgerät eingebbare nutzerspezifische Identifikationsdaten, empfängerspezifische Adreßdaten und Informationsdaten änder- und speicherbar sind und
daß ein Chipkartenleser (15) vorgesehen ist, der an das Datenerfassungs- und/oder -ausgabegerät anschließbar oder in diesen integriert ist.

12. Datenkommunikationssystem nach Anspruch 11, **dadurch gekennzeichnet,** daß die Kommunikationseinrichtung (11) als Datenerfassungs- und -ausgabegerät derart ausgeführt ist, daß das Datenerfassungs- (12), das Datenlese- (15) und das Datenausgabegerät (16) in einem Gerät integriert sind.

13. Datenkommunikationssystem nach Anspruch 11 oder 12, **dadurch gekennzeichnet,** daß der Hostrechner (3) mit adressierbaren Verbindungen zu anderen Netzen (5-8) versehen ist.

## Claims

1. Technique for data communication in which information data are acquired by means of an acquisition device using a transmitting user, provided with applicable address data, made available to an authorized receiving user in a host computer for output of the same, whereby a comparison of identifying data and address data is conducted in order to determine the authorization, whereby during a configuration that precedes the data communication a transportable data carrier is provided with carrier-specific and/or user-specific identifying data and which is used by at least one receiving user in such a way that this identifying data for determining the authorization are read from the data carrier and, in case they conform, at least one receiving signal designating existing information data is output to the receiving user, **characterized in that** a chip card (14) with writeable and readable NV memory and ROM memory is used as the data carrier,
that in the configuration at least the data carrier-specific identifying data are permanently stored,
that information to be sent by the transmitting user are stored on the chip card (14), and
that in case of use by a transmitting user the data input of information and address data is only approved if identifying data conform to the authorization data.

2. Technique for data communication according to Claim 1, **characterized in that** the receiving signal is transmitted to the receiving user on a separate transmission channel.

3. Technique for data communication according to Claim 1 or 2, **characterized in that** the information and/or address data to be sent are stored on the chip card (14) at one point in time and are read from the chip card (14) at a later time for data input to the host computer.

4. Technique for data communication according to one of the Claims 1 through 3, **characterized in that** the authorization data in an input identifier are such that before the comparison with the authorization data by the user the identifier is input with which the personal identifier stored on the portable data carrier(14)is compared.

5. Technique for data communication according to one of the Claims 1 through 3, **characterized in that** the authorization data are stored in the host computer (3).

6. Technique for data communication according to one of the Claims 1 through 5, **characterized in that** the memory-specific identifier during sending of information can be read out of the memory as transmitter information of the transmitting user after conformity of an identifier of the transmitting user to be input before sending with a personal identifier stored in memory.

7. Technique for data communication according to one of the Claims 1 through 6, **characterized in that** the stored personal identifier can be changed after conformity of an identifier of the transmitting user to be input before sending with the personal identifier stored in memory.

8. Technique for data communication according to one of the Claims 1 through 7, **characterized in that** the information data can be forwarded to receivers by means of the address data or an additional service identifier by interposing other nets.

9. Technique for data communication according to one of the Claims 1 through 8, **characterized in that** fee information conforming to the transmitted information is produced and stored on the chip card (14) by the host computer.

10. Technique for data communication according to one of the Claims 1 through 9, **characterized in that** an accounting identifier is store on the chip card and fee information conforming to the transmitted information is produced by the host computer and that this fee information is forwarded for further processing to a computer conforming to the accounting identifier.

11. Data communication system with a portable data carrier, a data acquisition device for acquisition and storing of data on the data carrier, a data reading device for reading the data carrier, a data output device, several spatially separated communication facilities that include at least the data reading device and a standing connection, a dialup telephone link or a data radio link to a host computer, **characterized in that** the data carrier consists of a chip card (14) with readable and writeable NV memory and ROM memory on which data carrier-specific identifying data can be permanently stored and user-specific identifying data, receiver-specific address data and information data to be input via the data acquisition device can be changed and stored and
that a chip card reader (15) is provided for that can be connected to or is integrated in the data acquisition and/or output device.

12. Data communication system according to Claim 11, **characterized in that** the communication facility (11) is designed as a data acquisition and output device such that the data acquisition device (12), the data reading device (15) and the data output device (16) are integrated in one device.

13. Data communication system according to Claim 11 or 12, **characterized in that** the host computer (3) is provided with addressable connections to other nets (5-8).

## Revendications

1. Procédure de communication des données par laquelle, au moyen d'un matériel de saisie de données, des données d'informations sont saisies par un émetteur-utilisateur et, au moyen de données d'adresses correspondantes, sont mises à la disposition d'un destinataire-utilisateur accrédité dans un ordinateur hôte, par laquelle une comparaison entre les données d'identification et les données d'adresses est effectuée afin de déterminer l'accréditation et par laquelle, au cours d'une configuration précédant la communication des données, un support de données amovible reçoit des données d'identification spécifiques au support de données et/ou à l'utilisateur, est au moins utilisé par le destinataire-utilisateur de manière à ce que lesdites données d'identification soient lues à partir du support de données en vue de déterminer l'accréditation et, en cas de correspondance entre les données, à ce qu'au moins un signal de réception soit envoyé au destinataire-utilisateur pour identification des données d'informations existantes, caractérisée par le fait qu'en tant que support de données, une carte à puces (14) est utilisée avec une mémoire nv d'écriture et de lecture et une mémoire ROM,
que, lors de la configuration, les données d'identification spécifiques au support de données au moins sont enregistrées sans modification possible,
que les informations à envoyer par l'émetteur-utilisateur sont enregistrées sur la carte à puces (14), et
que, en cas d'utilisation par un émetteur-utilisateur, la saisie de données d'informations et d'adresses n'est possible que lorsque les données d'identification correspondent aux données d'accréditation.

2. Procédure de communication des données d'après les spécifications 1, caractérisée par le fait que le signal de réception est transmis via un canal de transmission séparé au destinataire-utilisateur.

3. Procédure de communication des données d'après les spécifications 1 ou 2, caractérisée par le fait que les données d'informations et/ou d'adresses à envoyer sont enregistrées à un certain moment sur la carte à puces (14) et sont lues à un moment ultérieur à partir de la carte à puces (14) pour la saisie de données sur l'ordinateur hôte.

4. Procédure de communication des données d'après l'une des spécifications 1 à 3, caractérisée par le fait que les données d'accréditation existent dans une identification à saisir de sorte qu'avant la comparaison avec les données d'accréditation par l'utilisateur, la saisie porte sur l'identification avec laquelle l'identification personnelle enregistrée sur le support de données amovible est comparée.

5. Procédure de communication des données d'après l'une des spécifications 1 à 3, caractérisée par le fait que les données d'accréditation sont enregistrées dans l'ordinateur hôte (3).

6. Procédure de communication des données d'après l'une des spécifications 1 à 5, caractérisée par le fait que l'identification mémorisée peut être lue à partir de la mémoire comme information d'envoi de l'émetteur-utilisateur, lors de l'envoi de données d'informations, après correspondance entre une identification de l'émetteur-utilisateur à saisir avant l'envoi et une identification personnelle enregistrée dans la mémoire.

7. Procédure de communication des données d'après l'une des spécifications 1 à 6, caractérisée par le fait que l'identification personnelle enregistrée peut être modifiée après correspondance d'une identification de l'émetteur-utilisateur à saisir avant l'envoi et l'identification personnelle enregistrée dans la mémoire.

8. Procédure de communication des données d'après l'une des spécifications 1 à 7, caractérisée par le fait qu'au moyen des données d'adresses ou d'un indicatif de service supplémentaire, les données d'informations sont transmises aux destinataires par l'intercalage d'autres réseaux.

9. Procédure de communication des données d'après l'une des spécifications 1 à 8, caractérisée par le fait qu'une information sur les droits à payer correspondant aux données d'informations transmises est générée par l'ordinateur hôte (3) et que ladite information est enregistrée sur la carte à puces (14).

10. Procédure de communication des données d'après l'une des spécifications 1 à 9, caractérisée par le fait qu'un indicatif comptable est enregistré sur la carte à puces et qu'une information sur les droits à payer correspondant aux données d'informations transmises est générée par l'ordinateur hôte et que ladite information est communiquée pour traitement ultérieur à un ordinateur correspondant à l'indicatif comptable.

11. Système de communication des données avec un support de données amovible, un matériel de saisie des données pour la saisie et l'enregistrement de données sur le support de données, un matériel de lecture des données pour la lecture du support de données, un matériel d'émission des données, plusieurs dispositifs de communication séparés géographiquement les uns des autres, qui contiennent au moins le matériel de lecture des données et possèdent une liaison via une ligne spécialisée, une liaison téléphonique ou une liaison radio des données (au choix) vers un ordinateur hôte, caractérisé par le fait que le support de données est composé d'une carte à puces, dotée d'une mémoire nv d'écriture et de lecture et d'une mémoire ROM, sur laquelle des données d'identification non modifiables, spécifiques au support de données, sont enregistrées, et que via le matériel de saisie des données, des données d'identification à saisir, spécifiques à l'utilisateur, des données d'adresses et des données d'informations spécifiques au destinataire sont modifiables et enregistrables, et
qu'un lecteur de carte à puces est prévu pour être connecté au matériel de saisie des données et/ou d'émission des données ou intégré dans celui-ci.

12. Système de communication des données d'après la spécification 11, caractérisé par le fait que le dispositif de communication (11) est conçu comme matériel de saisie et d'émission des données de sorte que le matériel de saisie des données (12), le matériel de lecture des données (15) et le matériel d'émission des données (16) sont intégrés dans un seul appareil.

13. Système de communication des données d'après la spécification 11 ou 12, caractérisé par le fait que l'ordinateur hôte (3) est pourvu de liaisons adressables avec d'autres réseaux (5-8).
